# EUROPEAN PATENT APPLICATION

(11) **EP 2 644 929 A1**
(43) Date of publication of application: **02.10.2013**
(21) Application number: 12161704.7
(22) Date of filing: 28.03.2012
(51) Int. Cl.: F16D 65/62, F16D 66/00

(54) **Method of determining a zero instantaneous running clearance position of a brake**

(71) Applicant: Meritor Heavy Vehicle Braking Systems (UK) Limited, Cwmbran, Gwent NP44 3XU (GB)
(72) Inventor: Mazumdar, Abhishek, Cwmbran, Gwent NP44 3XU (GB)
(74) Representative: Jones, John Bryn

(57) **Abstract**

A method of determining a zero instantaneous running clearance position of a brake including:
monitoring a single parameter of a brake component during use of the brake,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

## Description

The invention relates to a method of determining a zero instantaneous running clearance position of a brake, in particular a heavy vehicle brake.

Known brakes include a brake disc and a brake caliper. The caliper operates to clamp the brake disc between two brakes pads to slow (or retard) an associated vehicle.

When the brakes in a released condition, each brake pad is spaced from its associated surface of the brake disc by a relatively small distance. The released (or brakes off) running clearance (also known as the air gap) of the system is primarily the sum of the gap between each pad and its associated surface of the brake disc. It is desirable to control the released running clearance to a predetermined (or desired) released running clearance so that when braking demand is required the brakes come on quickly, and there is no significant delay before the vehicle starts to slow down. However, if the released running clearance is set too small, then after the brakes have been applied the various brake components will have expanded (due to the heat generated on braking) and this expansion may take up all the cold released running clearance and then it will not be possible to release the brakes until they have cooled down.

Known brakes adjust the released running clearance between the brake pads and brake discs using a purely mechanical system. Adjustment starts after the brake pistons have moved through a predetermined distance, and is controlled by one or more backlashes built into the mechanism. Adjustment stops when the clamp load applied to the piston exceeds a threshold level, which is controlled by a torque limiting device in the adjustment mechanism.

Electronically controlled electrically actuated adjusters are known. Such devices require measurement of the released running clearance. This has been done by using a first sensor to determine travel of the brake pad and using a second sensor used to determine when the brake disc has applied a predetermined (generally relatively low) reaction force to the brake pads.

As will be appreciated, such an arrangement requires two sensors namely a displacement sensor and a force sensor.

Accordingly, there is a need for an improved design for adjusting the running clearance on a brake.

Thus, according to the present invention there is provided a method of determining a zero instantaneous running clearance position of a brake including:
monitoring a single parameter of a brake component during use of the brake,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

Advantageously, such a method allows the position of the brake when it is at a zero instantaneous running clearance condition to be determined by monitoring a single parameter. Once the zero instantaneous running clearance position of the brake is known, it is possible to determine the released (or actual) running clearance of the brake. The released running clearance can be compared with a desired release running clearance and adjustment can take place so that a subsequent released running clearance is nearer the desired released running clearance.

A processor may be used to monitor the single parameter of the brake component during use of the brake.

The processor may use a sensor to monitor the single parameter of the brake component during use of the brake.

The sensor may be a single sensor.

According to a further aspect of the present invention there is provided a brake arrangement configured to determine a zero instantaneous running clearance position of a brake by:
monitoring a single parameter of a brake component during use of the brake,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

The brake arrangement may include a processor to monitor the single parameter of the brake pad during use of the brake.

The brake arrangement may include a sensor in which the processor uses the sensor to monitor a single parameter of the brake component during use of the brake.

The sensor may be a single sensor.

The invention will now be described followed by way of example only, with reference to the accompanying drawings in which:-
Figure 1 shows a schematic view of a brake according to the present invention,
Figures 2 and 3 show how the brake force, actuating lever speed and actuating lever position of the brake of Figure 1 vary with time during a brake application, and
Figure 4 shows how the actuating lever speed of the brake of figure 1 varies with time during a brake application and subsequent release.

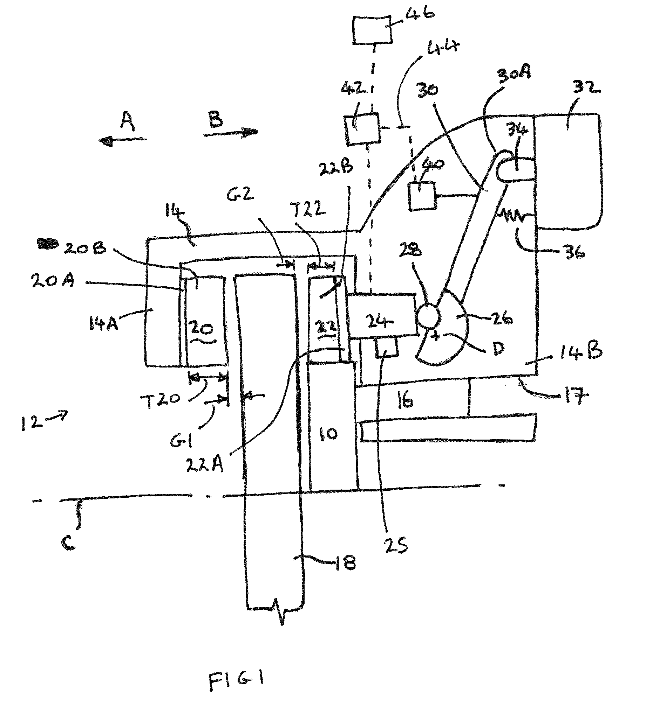

With reference to Fig. 1 there is shown a vehicle 10 having a brake 12. The brake 12 includes a caliper 14 which is slidably mounted via pin 16 on the vehicle 10, typically on a suspension component of the vehicle 10. Accordingly the caliper 14 can move in the direction of arrow A and in the direction of arrow B.

The vehicle 10 includes a brake rotor, in this case a brake disc 18 which is rotatably mounted about axis C. The brake disc 18 is rotatably fast with a wheel (not shown) which also rotates about axis C.

Brake pad 20 includes a brake pad back plate 20A and friction material 20B. Brake pad 22 includes a brake pad back plate 22A and friction material 22B.

On opposite axial sides of the brake disc there are brake pads 20 and 22. Adjacent brake pad 22 is an adjuster mechanism 24. An actuation shaft (or operating shaft) 26 is mounted in the caliper 14 and is rotatable about axis D. A roller 28 is supported on the actuation shaft 26 and engages a right hand end (when viewing Figure 1) of the adjuster mechanism 24.

Operating lever 30 is attached to the actuating shaft 26. An actuator 32 is mounted on the caliper 14, and includes an actuator rod 34, which engages an end 30A of the actuating lever 30.

As shown in Figure 1 the brakes are in a released condition, operating lever 30 having being rotated clockwise about axis D such that a gap G1 exists between brake pad 20 and brake disc 18 and a gap G2 exists between brake pad 22 and brake disc 18. Accordingly, the released running clearance is G1 + G2.

In order to apply the brakes the actuator 32 is operated such that the actuator rod extends from the actuator and moves in a direction of arrow A thereby rotating the operating shaft 26 anti-clockwise about axis D. Because the roller 28 is offset from axis D, the roller 28 moves in the direction of arrow A which causes the adjustment mechanism 24 to move in a direction of A which forces the brake pad 22 in the direction of arrow A, thereby closing the gap G2. Continued anti-clockwise rotation of the operating shaft 26 then causes the caliper 14 to move in the direction of arrow B as the hole 17 in the caliper slides on pin 16. This causes gap G1 to close. At this point the instantaneous running clearance is zero but, because the brake pads are not being forced against the brake disc 18, no braking force exists to retard to slow the vehicle. Only when the actuator 32 continues to move the actuator rod 34 in the direction of arrow A, does a clamping force of the brake pads on the discs start to be generated. The clamping (or braking) force is dependent upon, amongst other things, the force in the actuating rod 34, a higher force actuating rod 34 resulting in a higher clamping force and therefore a higher retardation of the vehicle. As the force in actuator rod 34 increases, the elasticity in the various brake components allows for the actuator rod to continue to extend from the actuator and continue to move in the direction of arrow A relative to the actuator, in spite of the fact that the brake pads 20 and 22 are in engagement with the brake disc 18. By way of example, if the brake force is increased, the caliper 14 will start to deflect with the side 14a progressively moving further away from side 14b. Clearly other brake components will deflect as the brake force increases.

By way of example, if the released running clearance as shown in Figure 1 is 1 mm (e.g. G1 = 0.5 mm and G2 = 0.5 mm) and the operating ratio of the operating shaft 26 is approximately 20:1, (i.e. every 20 mm end 30A moves in the direction of arrow A, roller 28 moves 1 mm in the direction of arrow A), then to reduce the instantaneous running clearance to zero requires end 30A to move 20 mm in the direction of arrow A. However, at this point the brakes are not applied. In order to apply the brake end 30A must continue to be moved in the direction of arrow A relative to the actuator 32 and, by way of example, for the brake to be applied relatively heavy, end 30A must extend a further 20 mm, i.e. a total of 40 mm. This 40 mm movement of end 30A causes a roller 28 to "move" total of 2 mm, 1 mm of which closes gaps G1 and G2 and the other 1 mm of which is absorbed in the elasticity of the various components.

The adjuster mechanism 24 is electrically operated by electric motor 25. Thus the adjuster mechanism 24 can be extended (or lengthened) (such that end 24A moves away from end 24B) or retracted (or shortened) (such that end 24A moves towards end 24B) by operation of the electric motor 25. It will be appreciated that by extending the actuator mechanism 24 the released running clearance will reduce and by retracting (or shortening) the adjuster mechanism 24 the released running clearance will increase.

The vehicle 10 includes a sensor 40 and a processor 42, in one embodiment a microprocessor. There is also included a memory 46 such as data storage, such as flash memory.

The sensor 40 in this case is a position sensor and senses the position of the actuating lever 30. The sensor 40 together with the processor 42 and memory 44 can be used to determine the rest position of the actuating lever 30 (as shown in Figure 1) and can also be used to determine when the instantaneous running clearance has reduced to zero (but the brakes are not applied).

Consider the situation where the vehicle operator applies the brakes heavily. Using the example above, the actuator rod 34 will have moved 40 mm in the direction of arrow A. During the first 20 mm of movement all that occurs is that gap G2 closes and the caliper moves in the direction of arrow B such that gap G1 closes. At this moment, no braking force has yet been applied since the force required to, for example, slide the hole 17 along pin 16 is relatively low and thus the actuator rod 34 moves relatively quickly during its first 20 mm of movement. However, during the second 20 mm of "extension" of rod 34 the clamping force progressively increases and therefore the force required to move end 30A through the final 20 mm of movement increases considerably. This results in the actuator rod 34 extending more slowly over the second 20 mm of movement than over the first 20 mm of movement. By utilizing the sensor 40 to monitor the position of the actuating lever as the brake is applied, it is possible to determine when the instantaneous running clearance reduces to zero. The sensor 40 can also determine the rest position of the actuating lever 30. Knowing the rest position of the actuator lever 30 and the position of the actuating lever 30 when the instantaneous running clearance is zero enables the released running clearance to be determined.

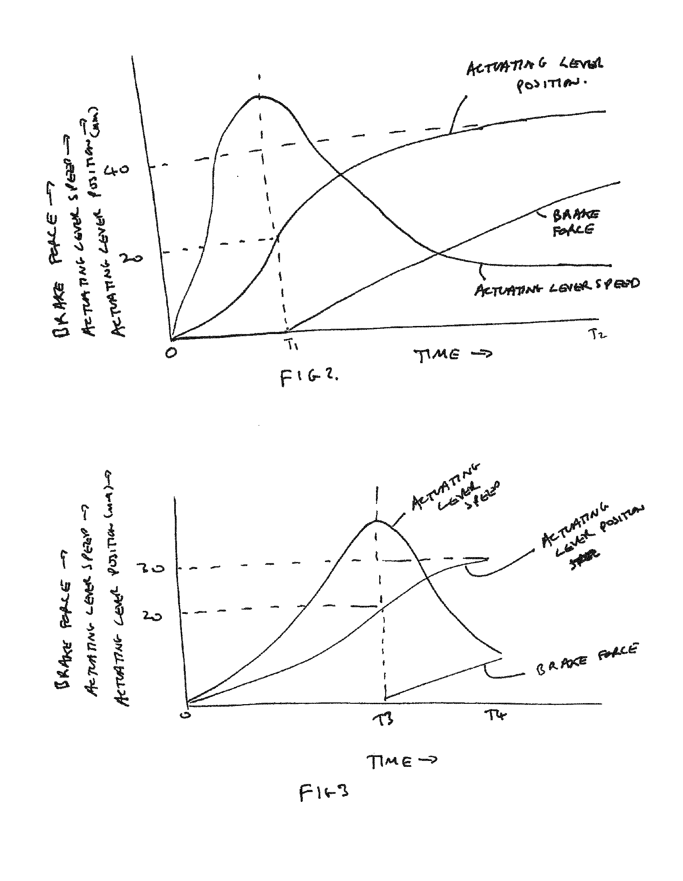

In more detail, with reference to Fig. 2 there is shown the position of the end 30A of the actuating lever 30 plotted against time as the vehicle operator demands a heavy braking force. The actuating lever position is sensed by sensor 40. Also shown on Fig. 2 is the actuating lever speed over the same time period and the brake clamp force over the same time period.

At time T₀ the actuating lever is positioned as shown in Fig. 1 in the rest condition. This is taken as zero displacement. Because there is an air gap G1, G2, then the brake force is zero. The actuating lever is stationary, and the actuating lever speed is zero.

As time T₀ the vehicle operator applies the brakes which causes the actuator 32 to move the actuator rod 34 in the direction of arrow A. The characteristics of the brake are such that the end 30A of the actuating lever moves as shown on Figure 2. Since the actuating lever position with respect to time is known, then it is possible to determine the actuating lever speed with respect to time. This has been plotted on Fig. 2. Significantly at time T₁ the actuating lever speed has reached a maximum, following which the speed decreases. This maximum speed coincides with the moment when the instantaneous running clearance has reduced to zero. Immediately after this time a clamping force begins to be generated which tends to slow down the speed of actuating lever. At time T₂ the actuator rod 34 has extended 40 mm and the actuating lever speed is relatively slower when compared with the peak at time T₁. At time T₂ the brake force is relatively high.

With reference to Figure 3 there is shown a plot of actuating lever speed, actuating lever position, and brake force with respect to time wherein the vehicle operator has applied the brake relatively slowly and relatively lightly. Under these circumstances it has taken time T₃ for the instantaneous running clearance to close to zero. It will be appreciated that the brake has been applied relatively lightly since the maximum displacement of the actuator rod 34 is only 30 mm at time T₄. Nevertheless, it will be appreciated that Figure 3 shows similar characteristics, namely that at the point of maximum lever speed, the instantaneous running clearance has reduced to zero. After this time a clamp force starts to be generated.

Thus, when a new brake has been designed, it may be fitted to a test vehicle and fitted with various instrumentation including, for example, a position sensor monitoring the position of a particular component of the brake assembly, and also a force sensor to measure the clamping force for the caliper. The test vehicle will then be driven and braked under various circumstances. Analysis of the data may show that at or near the zero instantaneous running clearance position of the brake component (as determined by the force sensor), the measured parameter may have a particular characteristic. In the example above, the measured parameter was velocity and the characteristic of the velocity that the point when the brake reached a zero instantaneous running clearance was a peak in the velocity. Understanding how a particular characteristic of a measured parameter relates to a zero instantaneous running clearance position of the brake allows subsequent vehicles (such as production vehicles) which monitor the same parameter, but which do not include a force sensor, be able to determine the zero instantaneous running clearance position of the brake from the measured parameter alone.

In the example above, a peak in the velocity profile of component 30 is a characteristic of the parameter (velocity) which is known (as a result of testing) to be indicative of a zero instantaneous running clearance position of the brake. Subsequent vehicles (such as production vehicles) fitted with a similar brake and with sensor 40, but without any force sensor can determine the zero instantaneous running clearance position of the brake by determining the position of the brake when the parameter (velocity of component 30) has a characteristic (a velocity peak) that is indicative of a zero instantaneous running clearance. This can be carried out by comparing the monitored (or measured) velocity peak with the predetermined characteristic (as measured on the test vehicle). If the measured velocity peak is of a similar profile to the predetermined velocity peak, then the system can determine that the measured velocity peak is indeed indicative of a zero instantaneous running clearance position of the brake. However, under other circumstances, a velocity peak may be produced which is not indicative of zero instantaneous running clearance position of the brake. Under these circumstances the velocity peak can be compared with the predetermined velocity peaks and where they are not sufficiently similar the system can determine that the measured velocity peak was not indicative of a zero instantaneous running clearance position of the brake and therefore ignore this particular velocity peak for the purposes of running clearance adjustment.

As will be appreciated, since it is possible to determine the point of zero instantaneous running clearance by monitoring a single parameter of the brake, only one sensor is required.

Once it is possible to determine the point of zero instantaneous running clearance then it is possible to determine an actual released running clearance. If that actual released running clearance differs from a desired running clearance, then the adjustment mechanism can be adjusted (either by being lengthened or shortened) in order to adjust the actual released running clearance to the desired released running clearance.

As will be appreciated, if wear of friction material has taken place then the adjustment mechanism can be adjusted by being lengthened to compensate for the wear. Alternatively if the brake has become hot through use, then under these circumstances the actual running clearance may decrease. As such, the adjustment mechanism can be adjusted by being shortened in order to increase the actual running clearance to nearer the desired running clearance. Clearly once the brake has cooled, then the adjustment mechanism can again be adjusted by being lengthened to compensate for the now cool brake.

As mentioned above, when the brake is applied, a peak velocity of end 30A coincides with a zero instantaneous running clearance condition. A zero instantaneous running clearance condition can also be determined during brake release. Thus, consider the situation where the brake has been applied relatively heavily. Brake components are under considerable load and they will have elastically deformed. Upon release of the brake, the stored elastic energy in the caliper etc is released and the brake releases to a zero instantaneous running clearance condition relatively quickly. Once at the zero instantaneous running clearance condition, the only forces acting on the actuating lever 30 are relatively light return spring forces designed into the brake to return the actuating lever 30 to the position shown in Figure 1. Tension spring 36 is a diagrammatical representation of a return spring. Thus, a sudden reduction in the speed of the actuating lever 30 substantially coincides with the point at which the instantaneous running clearance is zero and no braking force.

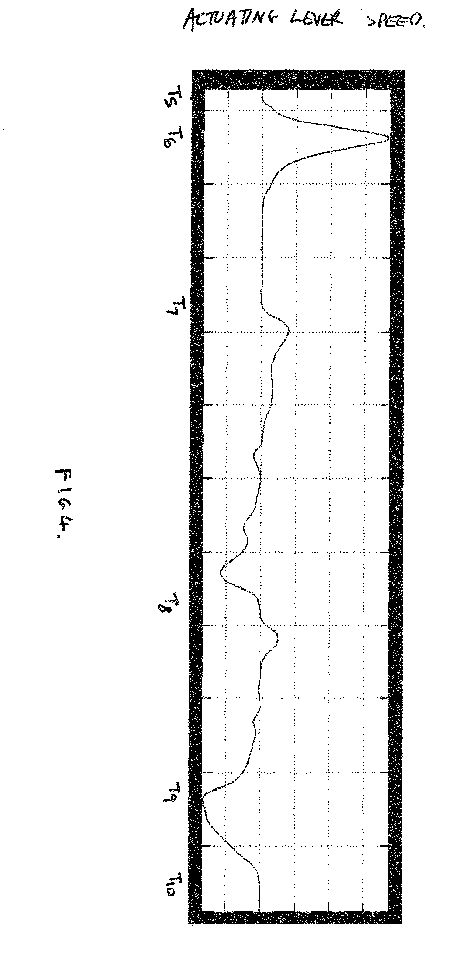

Figure 4 shows a plot of the actuating lever speed of brake 12 plotted against time during an application and release of the brake. The sequence of events that occurs is as follows:-

Prior to time T₅ the brake is in an off condition.

At time T₅ the operator starts to apply brake at a reasonably hard pressure.

The peak in the graph at time T₆ is an indication that the brake is near a zero instantaneous running clearance position.

Between time T₆ and T₇ the brake pressure is maintained at a reasonably hard pressure.

Between time T₇ and T₈ the brake pressure is progressively increased to a very hard pressure and then progressively decreased to a reasonably hard pressure.

Between time T₈ and T₉ the brake pressure is gradually increased then relatively quickly decreased.

The trough in the graph at time T₉ is an indication that the brake is near a zero instantaneous running clearance position during release.

At time T₁₀ the brake is fully released.

Consideration of the peak at time T₆ shows that it is both higher than the peak near time T₇ and also it is a relatively sharper peak than the peak near time T₇. As a result of previous testing of the brake it can be determined that the characteristic of the peak at time T₆ indicates that at time T₆ the brake is near a zero running clearance position, whereas the characteristic of the peak near time T₇ indicates that at time T₇ the brake is not near a zero running clearance position. Furthermore, as a result of the previous testing of the brake, the actual zero running clearance position of the brake relative to the peak at time T₆ can be determined.

Consideration of the trough at time T₉ shows that it is deeper than the trough at time T₈. As a result of previous testing of the brake it can be determined that the trough characteristic shown at T₉ is indicative of a zero instantaneous running clearance position whereas the trough near T₈ is not indicative of a zero instantaneous running clearance position. Furthermore, as a result of previous testing of the brake, the actual zero running clearance position of the brake can be determined relative to the trough at T₉.

Thus, as will be appreciated, it is possible to determine a zero instantaneous running clearance position when the brakes are being applied. It is also possible to determine a zero instantaneous running clearance when the brakes are being released.

Figure 2 to 4 show simplified plots for ease of explanation of the general principals of the invention. In practice, as with all measurement techniques, noise is generated and this noise has been filtered out from the plots of figures 2 to 4. Known filtering techniques may be used and the person skilled in the art would readily be able to apply such filtering techniques.

As mentioned above, the characteristic of the measured parameter can be compared with a predetermined characteristic to determine whether or not the measured characteristic is indicative of the zero instantaneous running clearance of the brake. Known comparison techniques may be used. Thus, in respect of a peak such as a velocity peak, the characteristics of a velocity peak may be that the peak must be within a certain aspect ratio (i.e. height of peak -v- width of peak) to be indicative of a zero instantaneous running clearance position of the brake. Alternatively or additionally the peak may have to be above a particular velocity, the peak may have to have occurred within a predetermined time of the brake being initially applied, the gradient of the curve approaching the peak may be within a specific range, the gradient of the curve after the peak may have to be within a specific range, and/or other predetermined characteristics may be chosen.

For ease of explanation, the operating ratio of the operating shaft 26 has been assumed to be 20:1 over the whole of the range of movement of the operating shaft 26. Typically, the operating shaft will not be a constant ratio, rather it will vary depending upon the instantaneous position of the operating shaft.

For ease of explanation, the release running clearance has been described as the sum of the gap between each pad and its associated surface of the brake disc. Under some circumstances a gap can appear between brake pad 20 and that part of caliper 14 which the brake pad engages when the brake is on. Furthermore, a gap can appear between brake pad 22 and that part of the adjuster mechanism 24 which the pad engages when the brake is on. The released running clearance is the sum of gaps G1, G2, any gap existing between pad 20 and caliper 14 and any gap existing between pad 22 and adjuster mechanism 24.

The sensor 40 is a linear sensor. In further embodiments any type of position sensor could be used including rotary sensors. As shown in Figure 1 the position of the actuating lever 30 is sensed by sensor 40 and in other embodiments any other component of the brake could be sensed. As mentioned above sensor 40 is a position sensor and in other embodiments velocity sensors or accelerometers could be used to sense the velocity or acceleration of any brake component. This is possible since knowing the change of displacement over time allows calculation of velocity and acceleration and similarly knowing the change in speed over time allows calculation of position and acceleration, and similarly knowing change of acceleration over time allows calculation of position and speed.

Different embodiments of brakes will have different characteristics, for example the elasticity of components of one embodiment may be different to the elasticity of equivalent components of a second embodiment. A desired released running clearance of one embodiment may be different to a desired released running clearance of another embodiment. Accordingly, a particular embodiment of a brake may be tested to determine the operating characteristics both during application of the brake and during release of the brake. Testing may be carried out at different application rates and different release rates. Testing may be carried out with different release running clearances. Testing may be carried out at different brake temperatures. Testing may be carried out when the brake is new and also when the brake is old. Once testing has been completed for a particular embodiment, the operating characteristics will be known. It will then be possible to programme processor 42 with certain characteristics (or functions) relating to the tested brake. When the brake is applied sensor 40 send a signal (via line 44) to processor 42, this signal will be compared with the predetermined function to determine the actual released running clearance. Processor 42 can compare the actual released running clearance with the desired released running clearance. Any difference between the actual released running clearance and the desired released running clearance can then be corrected by processor 42 commanding the adjustment of adjuster mechanism 24.

Because each particular embodiment (design) of a brake will have its own particular operating characteristic and in particular its own desired released running clearance, the processor associated with that particular design of brake will be programmed with the characteristics (function) of that design.

Adjuster mechanism 24 may take the form of an extendable piston.

## Claims

1. A method of determining a zero instantaneous running clearance position of a brake including:
monitoring a single parameter of a brake component during use of the brake,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

2. A method as defined in claim 1, wherein the monitored parameter is monitored during a single application and release of the brake.

3. A method as defined in claim 1, wherein the monitored parameter is monitored during a single application of the brake.

4. A method as defined in claim 1, wherein the monitored parameter is monitored during a single release of the brake.

5. A method as defined in claim 2 or 3 or 4 further including the step of subsequently carrying out the method of any preceding claim.

6. A method as defined in any preceding claim, including the steps of monitoring an acceleration of the brake component, and determining a point of maximum deceleration of the brake component to determine when the instantaneous running clearance is zero.

7. A method as defined in any one of claims 1 to 5, including the steps of monitoring a velocity of the brake component, and determining a point of maximum velocity of the brake component to determine when the instantaneous running clearance is zero.

8. A method as defined in any one of claims 1 to 6, including the steps of monitoring a velocity of the brake component, and determining a change of velocity of the brake component during release of the brake to determine when the instantaneous running clearance is zero.

9. A method of determining a zero instantaneous running clearance position of a brake on a vehicle including:
monitoring a single parameter of a brake component during use of the brake to retard or slow the vehicle,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

10. A method of adjusting an actual running clearance of a brake including:
determining a zero instantaneous running clearance position of a brake as defined in any preceding claim,
determining from the zero instantaneous running clearance positions of the brake an actual running clearance of the brake,
providing a desired running clearance of the brake, and
adjusting the brake such that a subsequent actual running clearance of the brake is nearer the desired running clearance of the brake.

11. The method of claim 10 wherein said actual running clearance is greater than said desired running clearance and said subsequent actual running clearance is less than said actual running clearance.

12. The method of claim 10 wherein said actual running clearance is less than said desired running clearance and said subsequent actual running clearance is greater than said actual running clearance.

13. A method of adjusting an actual running clearance of a brake including the steps of performing the method of one of claim 11 and 12 and then subsequently performing the method of the other of claim 11 and 12.

14. A brake arrangement configured to determine a zero instantaneous running clearance position of a brake by:
monitoring a single parameter of a brake component during use of the brake,
determining the position of the brake when the parameter has a monitored characteristic that is indicative of a zero instantaneous running clearance position by comparing the monitored characteristic of the parameter with a predetermined characteristic of the parameter which is known to be indicative of a zero instantaneous running clearance position of the brake.

15. A brake arrangement as defined in claim 14 further configured to adjust an actual running clearance of a brake by:
determining a zero instantaneous running clearance position of the brake as defined in claim 14,
determining from the zero instantaneous running clearance positions of the brake an actual running clearance of the brake,
providing a desired running clearance of the brake, and
adjusting the brake such that a subsequent actual running clearance of the brake is nearer the desired running clearance of the brake.
